# EUROPEAN PATENT SPECIFICATION

(11) **EP 1 331 299 B1**
(45) Date of publication and mention of the grant of the patent: **24.05.2006**
(21) Application number: 02026115.2
(22) Date of filing: 23.11.2002
(51) Int. Cl.: D06F 37/22

(54) **Shock-absorber strut for washing machines**
Stossdämpfer für Waschmaschinen
Amortisseur pour machine à laver

(30) Priority: 28.01.2002 IT PN20020004
(43) Date of publication of application: 30.07.2003
(73) Proprietor: Electrolux Home Products Corporation N.V., 1930 Zaventem (BE)
(72) Inventor: Burello, Giampaolo, 33170 Pordenone (IT)
(74) Representative: Giugni, Valter

(56) References cited:
- EP-A- 0 555 707
- DE-A- 1 485 091
- PATENT ABSTRACTS OF JAPAN vol. 017, no. 243 (C-1058), 17 May 1993 (1993-05-17) -& JP 04 371195 A (MATSUSHITA ELECTRIC IND CO LTD), 24 December 1992 (1992-12-24)

## Description

The present invention refers to a combination of a clothes washing machine and a shock-absorbing strut, comprising a washing tub suspended in a support frame and in which a clothes drum is adapted to rotate.

Such a washing tub is generally known to be connected to the support frame of the machine via shock-absorber struts that are adapted to dampen the vibrations generated by the drum as it rotates.

Such shock-absorber struts usually comprise a piston that is capable of sliding in a cylinder under the interposition of means adapted to exert a braking action in response to the vibrations generated by the suspended washing assembly.

A shock-absorber strut that is particularly well-suited to such an application is described for instance in EP-A-0 487 311 and comprises means that are adapted to selectively nullify the above mentioned braking action, in particular when the drum is rotating in conditions of substantial balance at a high spin-extraction speed, in view of minimizing the transfer of vibrations from the suspended washing assembly to the load-bearing frame of the machine. In particular, the cylinder of the shock-absorber strut is connected to the frame of the machine (or the suspended assembly), whereas the piston is connected to the suspended assembly (or the frame). In any case, the connection of the piston is carried out through a bush, with respect to which the piston itself is normally joined axially by means of a pin that extends transversally with respect to the same bush and engages a corresponding annular groove in the piston itself. In these conditions, vibrations generated by the suspended, i.e. oscillating assembly can be transferred to the friction means to be suitably dampened.

During spin-extraction, on the contrary, the pin is actuated so as to disengage the groove in the piston, which can in this way slide freely, at least along a certain axial distance, with respect to the bush. In these conditions, the vibrations that are generated to a smaller extent by the oscillating assembly are substantially not transferred to the frame of the machine.

When the drum is at a standstill, the pin is pushed elastically against the piston, with which it only becomes again engaged, in correspondence of the annular groove, if the latter is axially aligned with the same pin. This particular condition of alignment, which is necessary for the shock-absorber strut to be again capable of exerting its braking action, can usually occur only in the case that the drum of the washing machine is subsequently driven to again rotate in a manner that proves sufficient in causing the piston to adequately displace with respect to the bush.

In other words, with this prior-art solution the axial position of the piston and the cylinder of the shock-absorber strut with respect to each other at the beginning of each operation cycle of the washing machine depends actually on the previous operating conditions and cannot be predetermined.

The same kind of a drawback is encountered with a mechanical shock-absorber strut of the type described in US-A-5,080,204, in which a thermal actuator mounted on the piston is adapted to axially compress an elastic frusto-conical spring-loaded member, so as to cause it to expand in view of bringing about the expansion of a friction ring arranged between the piston and the cylinder of the shock-absorber strut.

Both above cited prior-art solutions advantageously allow for the dampening characteristics of the shock-absorber strut to be varied in a selective manner; however, the afore cited fortuitousness in the mutual axial positioning makes the same solutions practically unsuitable in view of the possibility of effectively using the same shock-absorber struts to also measure the weight of the clothes loaded in the machine for washing.

*EP 0 555 707 discloses a friction damper for washing machines wherein the friction force with which the braking body rests against the housing can be adjusted in magnitude by means of integrated electric adjusting drive. Moreover, the adjustment drive may be operated in a mechanical manner the event of a power failure.*

Being capable of determining the weight of the clothes being loaded in the machine for washing is important in view of enabling the washing products, i.e. the detergent to be most accurately metered when added to the washing process, so as to avoid excessive usage of chemical aids and to reduce the emission of polluting effluents from the washing machine. In addition, such a capability makes it possible for the machine to automatically select the most appropriate washing programme to be carried out each time.

Usually, the washload, i.e. the clothes to be washed, is weighed outside the machine, in particular by making use to such a purpose of the lid that closes the loading aperture of the machine, to which there is associated a weight sensor, so as this is described in US-A-2,412,270. A solution of this kind, however, complicates the construction of the washing machine, particularly in the case of front-loading washing machines, which in fact should in this case be specially provided with a lid that they do not really need in general.

It therefore is a purpose of the present invention to provide a shock-absorber strut for washing machines, which, notwithstanding the fact of featuring a particularly simple and low-cost structure, also enables the weight of the clothes being loaded in the machine for washing to be measured in an accurate and fully reliable manner.

According to the present invention, this aim is reached in a shock-absorber strut for washing machines having the characteristics as recited in the appended claims.

Anyway, features and advantages of the present invention will be more readily understood from the description that is given below by way of nonlimiting example with reference to the accompanying drawings, in which:
- Figure 1 is a schematic view of a clothes washing machine incorporating a shock-absorber strut according to the present invention; and
- Figures 2 to 4 are schematic longitudinal sectional views of a preferred embodiment of the shock-absorber strut according to the present invention, in respective operating conditions thereof.

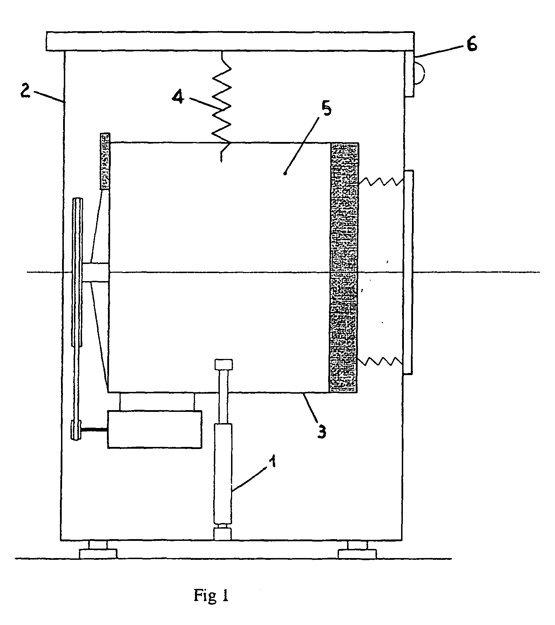

With reference to Figure 1, at least a shock-absorber strut 1 according to the present invention can be used in a clothes washing machine or a combined clothes washing and drying machine, or the like, to elastically connect to the frame 2 of the machine an oscillating washing assembly 3 that can be suspended even by means of springs 4. In a per se known manner, the oscillating washing assembly 3 comprises a clothes-holding drum (not shown), which is adapted to rotate about a substantially horizontal axis within an outer washing tub 5.

Preferably, the washing machine of the type in which the various operational components are controlled and actuated by an electronic programme sequence control unit 6.

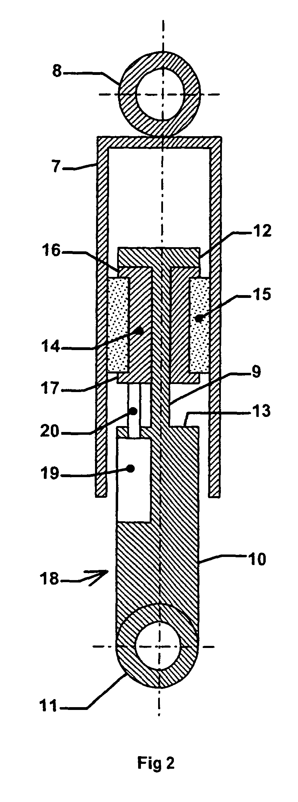

Referring also to Figures 2 to 4, the shock-absorber strut mainly comprises a cylinder 7 with a sealed end portion in correspondence of which there is provided an eyelet 8, or the like, for attachment to the suspended washing assembly 3 (or to the frame 2 of the machine).

In the cylinder 7 there is slidably provided the rod 9 of a piston 18, which has an end portion 10 that protrudes outside of the same cylinder and is provided with an eyelet 11, or the like, for attachment to the frame 2 of the washing machine (or to the suspended washing assembly 3).

On the rod 9 of the piston there is mounted, firmly joined co-axially thereto, a bush 14 which is capable of sliding axially with respect to the same rod, under a substantially negligible friction, between two limit stops that are defined by a head 12 and an abutment 13 of the piston, respectively. The abutment 13, in particular, may be formed by a bulge or swelling of the piston in correspondence of the end portion 10 thereof.

Around the bush 14 there is mounted, firmly joined axially thereto, at least a friction member 15, or the like, adapted to make friction with respect to the inner side surface of the cylinder 7 when said bush slides along the same cylinder. For example, the friction member 15 may be in a substantially annular or ring shape and may be retained axially between two mutually opposing shoulders 16 and 17 of the bush.

On the piston 18, preferably in correspondence of the swelled portion 10 thereof, there is mounted an actuator 19 that may be of an electromechanical type, and preferably is a thermal-expansion actuator, adapted to be controlled by the programme sequence control unit 6 of the washing machine.

In particular, the actuator 19 comprises a moving member 20 that is normally in an extracted position (Figure 2). In this condition, the bush 14 is bearing against the head limit-stop 12 of the piston 18 and is not capable of sliding with respect to the latter.

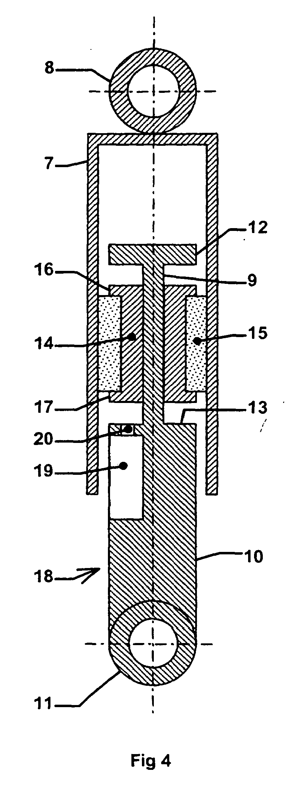

When the actuator 19 is on the contrary energized selectively, the moving member 20 thereof is retracted and releases the bush 14 that is in this way able to slide on the rod 9 of the piston 18 along an axial distance that is defined by and comprised between the limit-stops 12 and 13, so as this is illustrated in Figure 4. In this condition, the friction member 15 lies practically idle until the bush 14 eventually comes into contact with either one of said limit stops 12 or 13.

As an alternative thereto, the actuator 19 may of course be arranged in correspondence of the bush 14 itself, with the moving member 20 thereof that is in this case adapted to push against the abutment 13 of the piston, It can be noticed that the above described shock-absorber strut is capable of working effectively even if it is mounted in the inverted position, i.e. in the case that the mutual position of the eyes 8 and 11 is exchanged, so as to have the cylinder 7 connected to the frame of the machine and the piston 18 connected to the oscillating washing assembly.

In all cases, the shock-absorber strut 1, when installed in a washing machine as illustrated in Figure 1, will work as described below.

Let it be assumed that, when the washing machine is switched on, the shock-absorber strut is in the condition illustrated in Figure 2, with the actuator 19 in its extracted position and the rod 9 of the piston 18 prevented from sliding in either direction with respect to the bush 14. The latter is therefore substantially joined firmly to the piston 18, so that a friction is exerted the friction member 15 and the inner wall of the cylinder 7.

In the case considered according to the present invention, in which the operation cycle of the washing machine includes a step for weighing the clothes that are loaded in the suspended washing assembly 3, such a weighing operation can be performed by the programme sequence control unit 6 of the machine on the basis of the resulting axial displacement of the shock-absorber strut with the drum at a standstill, i.e. under static conditions. Such a displacement of the shock-absorber strut can be measured for example with the aid of an inductive sensor (not shown).

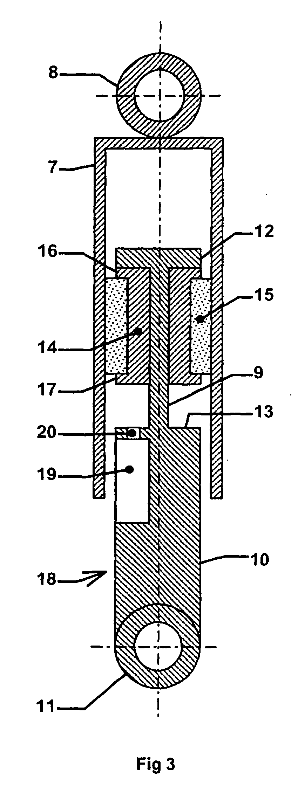

In order to start the washload weighing phase of the process, the actuator 19 is temporarily operated by the programme sequence control unit 6 to retract the moving member 20, while the bush 14 keeps being positioned against the head limit-stop 12 of the piston, so as this is illustrated in Figure 3.

At this point, the clothes can be loaded into the washing machine, where the weight of the clothes being so loaded causes the suspended washing assembly 3 to lower and, as a result, the cylinder 7 to displace downwards with respect to the piston 18, since the cylinder 7 is hinged on with its eye 8 to the suspended washing assembly 3. Such relative displacement of the cylinder 7 with respect to the piston 18 causes the bush 14 to correspondingly displace, i.e. slide downwards along the rod 9 of the piston, as illustrated in Figure 4. In fact, the inner wall of the cylinder 7 carries the bush 14 with it, due to friction with the friction member 15, while the bush itself slides freely along the rod 9 of the piston 18.

The lowering of the cylinder 7 is detected by a sensor (not shown), which may be of any appropriate type known in the art and is adapted to output a corresponding signal to the programme sequence control unit 6 of the machine. As a result, the programme sequence control unit 6 is able to go on automatically to first calculate the exact amount of detergent needed to wash the so weighed load of clothes and then select the most appropriate programme to wash and handle such a washload, also on the basis of the other process parameters that are duly set by the user, such as the type of fabrics in the washload and the kind or amount of soil to be removed.

Next, in view of starting and carrying out the various other steps of the washing process, the actuator 19 is restored in its extracted position so as to push and keep the bush 14 against the head limit-stop 12, thereby making it firmly joined to the piston 18. Therefore, during the various steps of the actual washing process, the shock-absorber strut 1 will behave in the usual manner as any other kind of shock-absorber struts known in the art.

However, it should be noticed that, even during spin-extraction phases, the actuator 19 may be commanded through the programme sequence control unit 6 to move into its retracted position (Figure 4), so as to release the bush 14 with respect to said limit stops 12 and 13 and enable the friction member 15 to only exert its braking action in front of large oscillations, i.e. oscillations having an amplitude that is greater than the difference between the distance of the two limit stops 12 and 13 from each other and the length of the bush itself. This peculiar feature translates into the fact that the shock-absorber strut does not develop any braking action when the machine is spin-extracting, thereby reducing noise and the amount of vibrations being transferred on to the floor. In addition, in the case that such slow-response actuators as the thermal-expanding ones are used, the shock-absorber strut is capable of also developing a braking action in the case that oscillation conditions in excess of the normal ones come actually to occur, as this may be true for example in the case of a sudden power failure.

## Claims

1. *A combination of a clothes washing machine and a* shock-absorber strut (1) comprising an oscillating washing assembly (3) with a washing tub (5) suspended in a support frame and in which there is capable of rotating a clothes-holding drum, in which the machine is controlled by an automatic programme sequence control unit (6) and the shock-absorber strut (1) comprises a cylinder (7) and a piston (18) arranged co-axially and capable of sliding with respect to each other under interposition of a friction member (15) therebetween, **characterized in that** an actuator (19) is associated to the shock-absorber strut (1) and is adapted to control the positioning of the friction member (15) so as to enable the latter to displace owing to clothes, i.e. washload items being loaded into the machine, said actuator (19) being further connected to the programme sequence control unit (6) of the machine, *said actuator (19) is associated to the piston (18) of the shock-absorber strut (1) and is provided with a moving member (20) adapted to push the friction member (15) into bearing against a limit stop (12) provided at the end portion of the rod (9) of the piston (18).*

2. *A combination* of *a clothes washing machine and a* shock-absorber strut according to *claim 1*, **characterized in that** a bush (14) to which *the friction member (15) is mounted, is mounted on the rod* (9) *of the piston (18) and* is freely slidable without any friction along the rod (9) of the piston (18).

3. A *combination* of *a clothes washing machine and a* shock-absorber strut according to claim 1, **characterized in that** said actuator (19) is adapted to bring the friction member (15) into a fixed position before the clothes are loaded in the machine, as well as to release said friction member so as to detect the effect, i.e. the lowering of said cylinder, of the clothes being loaded in the machine on the shock-absorber strut (1) and, during spin-extraction, nullify the braking effect of said shock-absorber strut.

## Patentansprüche

1. Kombination aus einer Wäschewaschmaschine und einer Stoßdämpferstrebe (1), welche eine schwingende Waschanordnung (3) mit einem Waschbottich (5) umfasst, der in einen Stützrahmen eingehängt ist und in welchem eine die wäschestücke aufnehmende Trommel in der Lage ist sich zu drehen, wobei die Maschine durch eine automatische Programmfolge-Steuereinheit (6) gesteuert wird und die Stoßdämpferstrebe (1) einen Zylinder (7) und einen Kolben (18) umfasst, welche koaxial zueinander angeordnet und in der Lage sind, unter Zwischenschaltung eines dazwischen befindlichen Reibungsglieds (15) gegeneinander zu gleiten, **dadurch gekennzeichnet, dass** ein Betätigungsorgan (19) mit der Stoßdämpferstrebe (1) verbunden und so ausgelegt ist, dass es die Positionierung des Reibungsglieds (15) steuert, so dass das Letztere in die Lage versetzt wird, sich je nach den Wäschestücken, d. h. den Posten der Waschladung, die in die Maschine eingelegt wurden, zu verschieben, wobei das genannte Betätigungsorgan (19) außerdem mit der Programmfolge-Steuereinheit (6) der Maschine verbunden ist, das besagte Betätigungsorgan (19) mit dem Kolben (18) der Stoßdämpferstrebe (1) verbunden und mit einem Bewegungsglied (20) ausgestattet ist, welches so ausgelegt ist, dass es das Reibungsglied (15) in eine Anschlagposition gegen einen Begrenzungsanschlag (12) verschiebt, welcher am Endbereich der Stange (9) des Kolbens (18) vorhanden ist.

2. Kombination aus einer Wäschewaschmaschine und einer Stoßdämpferstrebe gemäß Anspruch 1, **dadurch gekennzeichnet, dass** eine Buchse (14), an welche das Reibungsglied (15) angebaut ist, auf die Stange (9) des Kolbens (18) montiert ist und ohne jegliche Reibung längs der Stange (9) des Kolbens (18) frei gleitfähig ist.

3. Kombination aus einer Wäschewaschmaschine und einer Stoßdämpferstrebe gemäß Anspruch 1, **dadurch gekennzeichnet, dass** das besagte Betätigungsorgan (19) so ausgelegt ist, dass es das Reibungsglied (15) in eine feste Position bringt, bevor die Wäschestücke in die Maschine eingelegt werden, und dass es das besagte Reibungsglied frei gibt, so dass die Wirkung der in die Maschine eingelegten Wäschestücke auf die Stoßdämpferstrebe (1), d. h. die Absenkung des besagten Zylinders, erfasst wird und während des Schleudervorganges die Bremswirkung der besagten Stoßdämpferstrebe aufgehoben wird.

## Revendications

1. Combinaison d'une machine à laver le linge et d'un amortisseur (1) comprenant un ensemble de lavage oscillant (3) avec une cuve de lavage (5) suspendue dans un châssis support et dans laquelle peut tourner un tambour de réception de linge, dans laquelle la machine est commandée par une unité de commande automatique (6) à séquences de programme et l'amortisseur (1) comprend un cylindre (7) et un piston (18) disposés de manière coaxiale et pouvant coulisser l'un par rapport à l'autre avec interposition d'un élément de frottement (15) entre eux, un actionneur (19) associé à l'amortisseur (1) et adapté pour contrôler la position de l'élément de frottement (15), ledit actionneur (19) étant relié de plus à l'unité de commande (6) à séquences de programme de la machine, ledit actionneur (19) étant associé au piston (18) de l'amortisseur (1) et étant muni d'un élément mobile (20) adapté pour pousser l'élément de frottement (15) en appui contre une butée de fin de course (12) prévue sur la partie d'extrémité de la tige (9) du piston (18).

2. Combinaison d'une machine à laver le linge et d'un amortisseur de chocs selon la revendication 1, **caractérisée en ce qu'**une douille (14), sur laquelle est monté l'élément de frottement (15), est montée sur la tige (9) du piston (18) et peut coulisser librement sans frottement le long de la tige (9) du piston (18).

3. Combinaison d'une machine à laver le linge et d'un amortisseur selon la revendication 1, **caractérisée en ce** ledit actionneur (19) est adapté pour placer l'élément de frottement (15) dans une position fixe avant que le linge soit chargé dans la machine, ainsi que pour libérer ledit élément de frottement afin de détecter l'effet, à savoir la baisse dudit cylindre, du chargement du linge dans la machine sur l'amortisseur (1) et, durant l'essorage, annuler l'effet de freinage dudit amortisseur.
